(19) Europäisches Patentamt

European Patent Office

Office européen des brevets

(11) **EP 1 379 007 A2**

(12) **EUROPEAN PATENT APPLICATION**

(43) Date of publication:
**07.01.2004 Bulletin 2004/02**

(51) Int Cl.⁷: **H04B 1/52**, H04B 1/40

(21) Application number: **03253986.8**

(22) Date of filing: **24.06.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **04.07.2002 JP 2002196072**

(71) Applicant: **ALPS ELECTRIC CO., LTD.
Ota-ku Tokyo 145 (JP)**

(72) Inventor: **Ogata, Toshiharu
Tokyo 145 (JP)**

(74) Representative: **Kensett, John Hinton
Saunders & Dolleymore,
9 Rickmansworth Road
Watford, Hertfordshire WD18 0JU (GB)**

(54) **Transmitter-receiver**

(57) A transmitter-receiver comprises a transmission circuit (3) which outputs a transmitter signal; and a reception circuit (4) which receives a receiver signal whose frequency is different from that of the transmitter signal. The reception circuit has a mixer (4d) which first converts a frequency of the receiver signal to make it an intermediate frequency signal; and a trap circuit (4c) for attenuating the transmitter signal outputted from the transmission circuit is located before the mixer inside the reception circuit to prevent its own transmitter signal from entering the reception circuit.

## FIG. 1

## Description

BACKGROUND OF THE INVENTION

1. Field of the Invention

The present invention relates to a transmitter-receiver for a base unit and a cordless handset in a cordless phone, which uses different frequencies for transmission and reception and enables communication with the other party by simultaneous transmission and reception.

2. Description of the Related Art

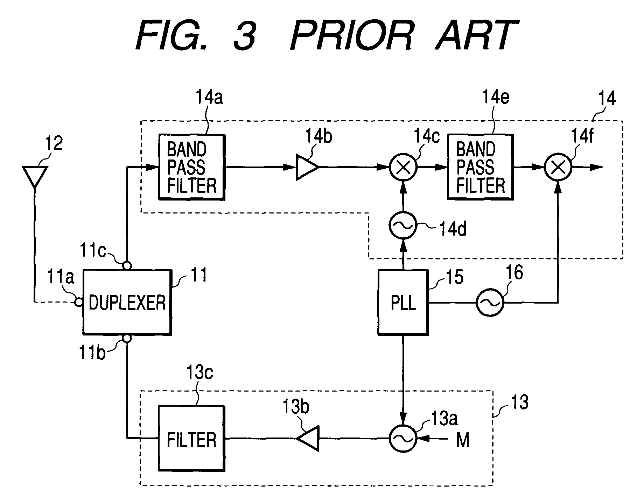

The configuration of a conventional transmitter-receiver is explained below referring to Fig. 3. Fig. 3 shows the configuration of a transmitter-receiver which is used in a cordless phone base unit. A duplexer 11 has an input/output terminal 11a, an input terminal 11b and an output terminal 11c. The input/output terminal 11a is connected with an antenna 12, and the input terminal 11b and the output terminal 11c are connected with a transmission circuit 13 and a reception circuit 14, respectively.

In the transmission circuit 13, a first VCO (voltage controlled oscillator) 13a generates frequencies ranging from 380.2125 MHz to 381.3125 MHz, in steps of 12.5 KHz. Here, the frequency is expressed by the formula $(380.2125 + 0.0125 \times N)$ MHz, where N denotes channel No. and is an integer between 0 and 88. A modulation signal M enters the first VCO 13a, which then outputs a transmitter signal. The transmitter signal is amplified to the required level by a power amplifier 13b and then passed through a filter (band pass filter or the like) 13c and sent to the duplexer 11. The duplexer 11 is structured in a way to allow a transmitter signal to pass between the input terminal 11b and the input/output terminal 11a Thus, the transmitter signal is sent to the antenna 12.

In the reception circuit 14, a band pass filter 14a receives a receiver signal, or a signal which has been received by the antenna 12 and then outputted from the output terminal 11c of the duplexer 11. The receiver signal is a signal sent from the handset and its frequency is in the range from 253.8625 MHz to 254. 9625 MHz and changes in steps of 12. 5 kHz. The receiver signal frequency is expressed by the formula $(253.8625 + 0.0125 \times N)$ MHz. Then the signal is amplified by a high frequency amplifier 14b and sent to a first mixer 14c. A local oscillation signal of nearly 275 MHz is supplied from a second VCO 14d to the first mixer 14c. The frequency is properly expressed by the formula $(275.1625 + 0.0125 \times N)$ MHz. Therefore, the second VCO 14d also generates frequencies in steps of 12.5 KHz. The first mixer 14c outputs a first intermediate frequency signal of 21.3 MHz.

The first VCO 13a in the transmission circuit 13 and the second VCO 14d in the reception circuit 14 are controlled by a PLL circuit 15 so that the values of N in the above oscillation frequency formulas are equal. A reference oscillator 16 sends a reference signal of 21.25 MHz to the PLL circuit 15. The first intermediate frequency signal outputted from the first mixer 14c goes through a band pass filter 14e to a second mixer 14f. A reference signal outputted from the reference oscillator 16 is sent as a local oscillation signal to the second mixer 14f. The second mixer 14f thus outputs a second intermediate frequency signal of 50 KHz. The second intermediate frequency signal is detected by a detection circuit (not shown) and an audio signal is extracted.

When a transmitter-receiver is to be used in a handset in a cordless phone, the transmitter signal frequency and the receiver signal frequency are reverse to those mentioned above, namely the first VCO 13a generates frequencies as expressed by $(253.8625 + 0.0125 \times N)$ MHz and the second VCO 14d generates frequencies as expressed by $(358. 9125 + 0.0125 \times N)$ MHz. Therefore, the frequency of the first intermediate frequency signal and the frequency of the second intermediate frequency signal are equal to those in the base unit.

In both the base unit and handset, the two VCOs 13a and 14d are controlled by the PLL circuit 15 so that the values of N for the VCOs are equal; as a consequence, the difference between the transmitter signal frequency and the receiver signal frequency is constant (126.35 MHz). If there is another pair of transmitters-receivers (a base unit and a cordless handset) nearby, the value of N as the channel number is changed so that the channel number differs between the pairs of transmitters-receivers in order to prevent interference between the pairs.

When the above-mentioned transmitters-receivers are used, the following problem may arise. If one transmitter-receiver (for example, in a base unit) in one pair of transmitters-receivers (let's call it Pair A) is communicating with the other transmitter-receiver (handset) in the pair while communication between transmitters-receivers in another pair (let's call it Pair B) is under way in the vicinity of the base unit in Pair A, reception of signals by the base unit in Pair A may be disturbed even though the transmission and reception frequencies are different between the pairs (namely, even though the channel number for Pair A is different from that for Pair B). The reason why this occurs will be explained in detail next.

Here, it is assumed that M denotes the channel No. for Pair B and N that for Pair A. The transmission frequency for the base unit in Pair B is expressed by $(380.2125 + 0.0125 \times M)$ MHz and that for the handset in Pair B by $(253.8625 + 0.0125 \times M)$ MHz, and that for the base unit in Pair A by $(380.2125 + 0.0125 \times N)$ MHz. A transmitter signal from the base unit in Pair A is sent through the duplexer 11 to the antenna 12. If the input terminal 11b and output terminal 11c in the duplexer 11 are not completely isolated from each other, the transmitter signal may leak out of the duplexer 11 and seep into the reception circuit 14. The two transmitter signals from Pair B may also enter the base unit in Pair A.

If that is the case, in the reception circuit 14 of the base unit in Pair A, the above-mentioned three types of transmitter signals are mixed by the high frequency amplifier 14b or the first mixer and an interfering signal whose frequency is the same as that of a transmitter signal from the handset in Pair A, or $(253.8625 + 0.0125 \times N)$ MHz, is generated according to the following formula:

$$- (380.2125 + 0.0125 \times M) \text{ MHz}$$

$$+ (253.8625 + 0.0125 \times M) \text{ MHz}$$

$$+ (380.2125 + 0.0125 \times N) \text{ MHz}$$

$$= (253.8625 + 0.0125 \times N) \text{ MHz}$$

Likewise, if the cordless handset in Pair A is in the vicinity of the two transmitters-receivers in Pair B, an interfering signal whose frequency is the same as that of a transmitter signal from the base unit in Pair A, or $(380.2125 + 0.0125 \times N)$ MHz, is generated in the reception circuit of the handset.

SUMMARY OF THE INVENTION

The primary object of the present invention is to prevent one transmitter-receiver in a pair of transmitters-receivers from being disturbed by two transmitter signals from two transmitters-receivers in another pair in the vicinity of which the transmitter-receiver is being used even if the signals enter it.

In order to solve the above problem, according to an aspect of the present invention, there is provided a transmitter-receiver comprising: a transmission circuit which outputs a transmitter signal; and a reception circuit which receives a receiver signal whose frequency is different from that of the transmitter signal. Here, the reception circuit has a mixer which first converts the frequency of the receiver signal to make it an intermediate frequency signal; and a trap circuit for attenuating the transmitter signal outputted from the transmission circuit is located before the mixer inside the reception circuit.

Preferably, the transmitter-receiver further comprises an input/output terminal for output of the transmitter signal and input of the receiver signal and a duplexer for connecting the transmission circuit and the reception circuit with the input/output terminal, and the trap circuit is located between the duplexer and the mixer.

Preferably, a high frequency amplifier for amplifying the receiver signal is located between the duplexer and the mixer, and the trap circuit is located between the high frequency amplifier and the mixer.

Preferably, a frequency of the transmitter signal to be attenuated by the trap circuit is approximately 381 MHz.

Preferably, the frequency of the transmitter signal to be attenuated by the trap circuit is approximately 254 MHz.

An embodiment of the present invention, will now be described, by way of example, with reference to the accompanying drawings, in which:

Fig. 1 is a circuit diagram showing the configuration of a transmitter-receiver according to the present invention;
Fig. 2 is a circuit diagram showing a trap circuit used in a transmitter-receiver according to the present invention; and
Fig. 3 is a circuit diagram showing the configuration of a conventional transmitter-receiver.

DETAILED DESCRIPTION OF THE PREFERRED EMBODIMENT

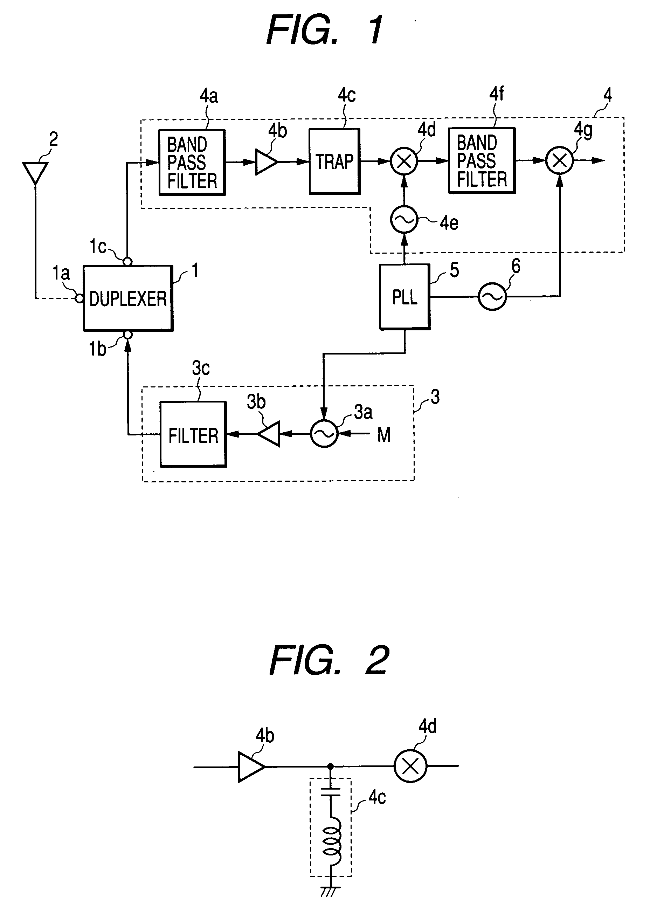

Next, a transmitter-receiver according to the present invention will be described referring to Fig. 1. Fig. 1 shows the configuration of a transmitter-receiver which is used in a base unit in a cordless phone. A duplexer 1 has an input/output terminal 1a, an input terminal 1b and an output terminal 1c. The input/output terminal 1a is connected with an antenna 2, and the input terminal 1b and the output terminal 1c are connected with a transmission circuit 3 and a reception circuit 4, respectively.

In the transmission circuit 3, a first VCO (voltage controlled oscillator) 3a generates frequencies ranging from 380.2125 MHz to 381.3125 MHz, in steps of 12.5 KHz. The frequency is expressed by the formula $(380.2125 + 0.0125 \times N)$ MHz, where N denotes channel No. and is an integer between 0 and 88. A modulation signal M enters the first VCO 3a, which then outputs a transmitter signal. The transmitter signal is amplified to the required level by a power amplifier 3b and then passed through a filter (bandpass filter or the like) 3c and sent to the duplexer 1. The duplexer 1 is structured in a way to allow a transmitter signal to pass between the input terminal 1b and the input/output terminal 1a. Thus, the transmitter signal is sent to the antenna 2.

In the reception circuit 4, a band pass filter 4a receives a receiver signal, or a signal which has been received by the antenna 2 and then outputted from the output terminal 1c of the duplexer 1. The receiver signal is a signal sent from the handset and its frequency is in the range from 253.8625 MHz to 254. 9625 MHz and changes in steps of 12.5 kHz. The receiver signal frequency is expressed by the formula $(253.8625 + 0.0125 \times N)$ MHz. Then the signal is amplified by a high frequency amplifier 4b and sent to a trap circuit 4c.

The trap circuit 4c, which includes, for example, a series resonance circuit as shown in Fig. 2, attenuates a transmitter signal sent from the transmission circuit 3. Therefore, the resonance frequency is adjusted to the frequency of the transmitter signal, or approximately 381 MHz. The trap circuit 4c is not limited to the series resonance circuit as shown in Fig. 2 but may be in another form such as a band rejection filter or a parallel resonance circuit.

Consequently, even if a transmitter signal outputted from the transmission circuit 3 leaks out of the duplexer 1 and seeps into the reception circuit 4, the leak signal is attenuated by the trap circuit 4c and hardly introduced into the first mixer 4d.

The receiver signal which has passed through the trap circuit 4c enters the first mixer 4d. A local oscillation signal of nearly 275 MHz is supplied from a second VCO 4e to the first mixer 4d. The frequency is properly expressed by the formula $(275.1625 + 0.0125 \times N)$ MHz. Therefore, the second VCO 4e also generates frequencies in steps of 12.5 KHz. The first mixer 4d outputs a first intermediate frequency signal of 21.3 MHz.

The first VCO 3a in the transmission circuit 3 and the second VCO 4e in the reception circuit 4 are controlled by a PLL circuit 5 so that the values of N (channel number) in the above oscillation frequency formulas are equal. A reference oscillator 6 sends a reference signal (21.25 MHz) to the PLL circuit 5. The first intermediate frequency signal outputted from the first mixer 4d goes through a band pass filter 4f to a second mixer 4g. A reference signal outputted from the reference oscillator 6 is sent as a local oscillation signal to the second mixer 4g. The second mixer 4g thus outputs a second intermediate frequency signal of 50 KHz. The second intermediate frequency signal is detected by a detection circuit (not shown) and an audio signal is extracted.

When a transmitter-receiver is to be used in a handset in a cordless phone, the transmitter signal frequency and the receiver signal frequency are reverse to those mentioned above, namely the first VCO 3a generates frequencies as expressed by $(253.8625 + 0.0125 \times N)$ MHz and the second VCO 4e generates frequencies as expressed by $(358.9125 + 0.0125 \times N)$ MHz. Therefore, the frequency of the first intermediate frequency signal and the frequency of the second intermediate frequency signal are equal to those in the base unit.

In addition, the trap circuit 4c is set so as to attenuate the oscillation frequency of the first VCO 3a, $(253.8625 + 0.0125 \times N)$ MHz, which is the frequency of the handset's own transmitter signal.

In both the base unit and handset, the two VCOs 3a and 4e are controlled by the PLL circuit 5 so that the values of N for the VCOs are equal; as a consequence, the difference between the transmitter signal frequency and the receiver signal frequency is constant (126.35 MHz). If there is another pair of transmitters-receivers (a base unit and a cordless handset) nearby, the value of N as the channel number is changed so that the channel number differs between the pairs of transmitters-receivers in order to prevent interference between the pairs.

In the above-mentioned constitution, if, in the vicinity of the transmitter-receiver of a base unit in a particular pair of transmitters-receivers, there are two transmitters-receivers in another pair (a base unit and a cordless handset) which are communicating with each other, the reception circuit of the base unit in the particular pair receives two transmitter signals from the transmitters-receivers in the other pair, where the respective frequencies of the signals are $(380.2125 + 0.0125 \times M)$ MHz and $(253.8625 + 0.0125 \times M)$ MHz. However, in the base unit in the particular pair, its internal trap circuit 4c prevents its own transmitter signal of $(380.2125 + 0.0125 \times N)$ MHz from being introduced into the mixer 4d in the reception circuit 4. Therefore, there is no interfering signal which might be caused by mixture of two transmitter signals from the other pair and its own transmitter signal.

Likewise, if, in the vicinity of the transmitter-receiver of a cordless handset in a particular pair of transmitters-receivers, there are two transmitters-receivers in another pair (a base unit and a cordless handset) which are communicating with each other, two transmitter signals from the transmitters-receivers in the other pair enter the reception circuit of the handset in the particular pair, where the respective frequencies of the signals are $(380.2125 + 0.0125 \times M)$ MHz and $(253.8625 + 0.0125 \times M)$ MHz. However, in the handset in the particular pair, its internal trap circuit 4c prevents its own transmitter signal of $(253.8625 + 0.0125 \times N)$ MHz from entering the mixer 4d in the reception circuit 4. An interfering signal might be generated in the first mixer 4d if the two transmitter signals from the other pair should be mixed with its own transmitter signal. Therefore, no interfering signal is generated in this case.

In this embodiment of the present invention, the trap circuit 4c is located between the high frequency amplifier 4b and the first mixer 4d. However, the invention is not limited thereto; it may be located before the high frequency amplifier 4b. If that is the case, generation of interfering signals in both the high frequency amplifier 4b and the first mixer 4c can be prevented.

Although the above explanation concerns transmitters-receivers which are used in cordless phones, it is needless to say that the invention may be applied to any other type of transmitter-receiver for full duplex communication which uses two different frequencies to transmit and receive signals.

As explained so far, the present invention provides a transmitter-receiver comprising: a transmission circuit which outputs a transmitter signal; and a reception circuit which receives a receiver signal whose frequency is different from that of the transmitter signal, wherein the reception circuit has a mixer which first converts the frequency of the receiver signal to make it an intermediate frequency signal; and a trap circuit for attenuating the transmitter signal outputted from the transmission circuit is located before the mixer inside the reception circuit. Therefore, even if it receives two transmitter signals from another pair of transmitters-receivers of the same type which is being used in the vicinity of it, no interfering signal is generated in the mixer inside the reception circuit.

In addition, the transmitter-receiver further comprises an input/output terminal for output of the transmitter signal and input of the receiver signal and a duplexer for connecting the transmission circuit and the reception circuit with the input/output terminal, and the trap circuit is located between the duplexer and the mixer. Therefore, even if its own transmitter signal leaks out of the duplexer, the leak signal does not enter the mixer.

In addition, a high frequency amplifier for amplifying the receiver signal is located between the duplexer and the mixer, and the trap circuit is located between the high frequency amplifier and the mixer. Therefore, even if the leak transmitter signal is amplified by the high frequency amplifier, it is attenuated effectively.

Furthermore, when a frequency of the transmitter signal to be attenuated by the trap circuit is approximately 381 MHz, no interference occurs even if a base unit in a domestic cordless phone receives a transmitter signal from another cordless phone.

Likewise, when the frequency of the transmitter signal to be attenuated by the trap circuit is approximately 254 MHz, no interference occurs even if a handset in a domestic cordless phone receives a transmitter signal from another cordless phone.

## Claims

1. A transmitter-receiver comprising: a transmission circuit which outputs a transmitter signal; and a reception circuit which receives a receiver signal whose frequency is different from that of the transmitter signal, wherein the reception circuit has a mixer which first converts the frequency of the receiver signal to make it an intermediate frequency signal, and wherein a trap circuit for attenuating the transmitter signal outputted from the transmission circuit is located before the mixer inside the reception circuit.

2. The transmitter-receiver according to Claim 1, wherein it further comprises an input/output terminal for output of the transmitter signal and input of the receiver signal and a duplexer for connecting the transmission circuit and the reception circuit with the input/output terminal, and wherein the trap circuit is located between the duplexer and the mixer.

3. The transmitter-receiver according to Claim 2, wherein a high frequency amplifier for amplifying the receiver signal is located between the duplexer and the mixer, and wherein the trap circuit is located between the high frequency amplifier and the mixer.

4. The transmitter-receiver according to Claim 2, wherein a frequency of the transmitter signal to be attenuated by the trap circuit is approximately 381 MHz.

5. The transmitter-receiver according to Claim 2, wherein the frequency of the transmitter signal to be attenuated by the trap circuit is approximately 254 MHz.

# FIG. 1

# FIG. 2

# FIG. 3 PRIOR ART